# EUROPEAN PATENT SPECIFICATION

(11) **EP 2 696 473 B1**
(45) Date of publication and mention of the grant of the patent: **28.10.2015**
(21) Application number: 11862450.1
(22) Date of filing: 29.04.2011
(51) Int. Cl.: H02K 3/24, H02K 3/51, H02K 1/32

(54) **VENTILATION SYSTEM FOR A ROTOR OF AN ELECTRIC MACHINE**
BELÜFTUNGSSYSTEM FÜR EINEN ROTOR EINER ELEKTRISCHEN MASCHINE
SYSTÈME DE VENTILATION D'UN ROTOR DE MACHINE ÉLECTRIQUE

(30) Priority: 01.04.2011 RU 2011112457
(43) Date of publication of application: 12.02.2014
(73) Proprietor: Zakrytoe Aktsionernoe Obshchestvo "Neft'Stal' Konstruktsiya", Moscow 115114 (RU)
(72) Inventor: SHALAEV, Vladimir Grigor'evich, St.Petersburg 197022 (RU)
(74) Representative: Spengler, Robert
(86) International application number: PCT/RU2011/000288
(87) International publication number: WO 2012/134328

(56) References cited:
- EP-A2- 1 841 042
- JP-A- H11 113 222
- RU-C1- 2 085 004
- RU-C1- 2 246 786
- RU-C2- 2 220 491
- US-A- 3 005 119
- US-A- 3 005 119
- US-A- 6 087 745
- US-B1- 6 844 637

## Description

### Field of invention

Claimed invention relates to the electrical machine industry and is designed for the use in ventilation of a rotor end winding of a large-sized electrical machine, in particular, the air-cooled turbine generator.

### Prior art

Within the rotor of electrical machine [1] the cooling air flow goes along the shaft to the space under the cylindrical shell, and then via the shell radial ducts made in the area of the coil bend reaches the end winding. Radial spacers mounted in-between the coils form the long-length zigzag ventilation ducts along the coils' sides.

Document [9] discloses a system of ventilation of an electrical machine rotor. The ventilation system comprises a shell placed under winding coil's ends; a space between the shell and a shaft is for providing cooling air feed to the rotor; radial spacers between adjacent coil's sides; and ventilation ducts for cooling of coil's ends. At zones of the cooling air inlet to the ventilation ducts, the shell is provided with radial ducts made at a pitch of one rotor slot. The ventilation ducts are U-shaped and made in the radial spacers.

Prototype of the claimed invention is the rotor ventilation system of the electrical machine [2] with winding located under the coils' ends and the shell enclosing the shaft. Cooling air flow goes through the space between the shell and the shaft to the rotor slotted part, and via the space over the shell - to the rotor end winding. Radial spacers are installed between the sides of the adjacent coils. Within the shell and coils' lower turns interspace longitudinal spacers are used to form the cooling air inlet and outlet zones, connected with the long-length ventilation ducts made in the winding strands. Removal of the cooling air flow from the end winding is provided to the direction of the rotor body.

The common drawback of the known rotor ventilation systems is that the cooling air flow goes along the end winding coils by the long small section ventilation ducts. Such ducts have significant air resistance and low discharge capacity. Therefore, the existing rotor ventilation systems are inefficient as applied to the high-power electrical machines.

Problem of the claimed invention is the increase of efficiency of the rotor end winding cooling.

Technical result consists in the increase of the electrical machine unit capacity.

### Disclosure of the invention

The problem is solved due to the fact that within the existing system of the electrical machine rotor ventilation, consisting of the shell located under the winding coils' ends, the space between the shell and the shaft for cooling air flow feed to the rotor; radial spacers between the adjacent coils' sides; ventilation ducts for cooling of the coils' ends; the space between the shell and the lower turns of the coils' ends, divided with the longitudinal spacers mounted therein into the zones of the cooling air inlet to the ventilation ducts, and the zones of the cooling air outlet from the ventilation ducts; such longitudinal spacers are mounted opposite to the rotor teeth at a pitch of the rotor slot; the shell at the zones of the cooling air inlet to the ventilation ducts is provided with radial ducts at a pitch of two rotor slots; such U-shaped ventilation ducts are made within the radial spacers; the system of ventilation being configured such that cooling air goes under to the rotor under the shell along the shaft, and a certain part of the airflow is used for cooling of the coils' ends; wherein cooling airflow enters the inlet zones via radial ducts of the shell, goes by ventilation ducts, cooling the coils' ends, and is discharged at the outlet zones; and wherein cooling air outflow goes from outlet zones either in the direction of the coil ends closing or in the direction of the rotor slotted part.

Background art revealed no facts of:
- location of the longitudinal spacers opposite the rotor teeth at a pitch of a rotor slot;
- making of the radial ducts within the shell at a pitch of two rotor slots.

### Brief Description of the Drawings

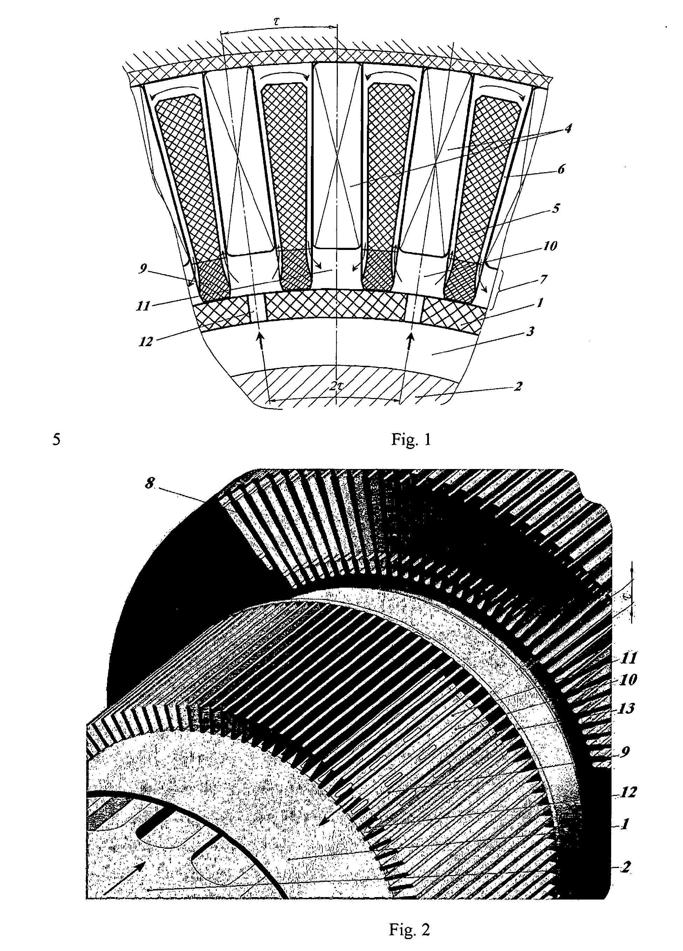

The claimed invention is illustrated by the drawings, where Fig. 1 represents a fragment of the cross section of the electrical machine rotor end; Fig. 2 shows a variant of the longitudinal spacers arrangement.

Rotor of an electrical machine, for example, turbine generator, consists of the shell 1 (see Fig. 1) enclosing the shaft 2, forming the space 3 to provide the cooling air feed to the rotor. Longitudinal spacers 5 with U-shaped ventilation ducts 6 for cooling of coils 4 are located between the coils 4 of the end winding. The space 7 between the shell 1 and coils 4 lower turns in the end winding opposite the rotor teeth 8 (Fig. 2) is equipped with the longitudinal spacers 9 at a pitch of a rotor slot (T). Longitudinal spacers 9 divide the space 7 to the zones of the cooling air inlet 10 into the ventilation ducts 6 and the zones of the cooling air outlet 11 from ventilation ducts 6. Inlet zones 10 of the shell 1 are provided with radial ducts 12 made at a pitch of two rotor slots (*2τ*). Spacers 9 can be mounted on the shell along the whole area of fingers 5 arrangement up to the right separating unit 13. At the drawings the cooling air flow movement is arrowed.

Cooling air goes under to the rotor under the shell 1 along the shaft 2, and a certain part of the airflow is used for cooling of the coils' ends. Cooling airflow via radial ducts 12

Cooling air goes under to the rotor under the shell 1 along the shaft 2, and a certain part of the airflow is used for cooling of the coils' ends. Cooling airflow via radial ducts 12 of the shell 1 enters the inlet zones 10, goes by ventilation ducts 6, cooling the coils' ends, and is discharged at the outlet zones 11. Short U-shaped ducts 6 have rather insignificant air resistance and the increased discharge capacity. Most part of the cooling airflow goes through such ducts, resulting in the increase of the electrical machine rotor cooling efficiency. Cooling air outflow from outlet zones 11 can be arranges either in the direction of the coil ends closing (for example, by mounting of the separating unit 13), or in the direction of the rotor slotted part.

Technical advantages of the claimed ventilation system consist in the opportunity to increase the current density in the winding, and, therefore, to improve the electrical machine capacity.

Considered sources of information:
1. Patent DE3700508, applicant: Siemens, H02K9/12, priority dated as of 09.01.1987, published on 21.07.1988.
2. Patent US3005119, applicant: General Electric, H02K, priority dated as of 05.08.1960, published on 17.10.1961
3. Patent DE1613196, H02K, priority dated as of 23.01.1967, published on 21.01.1971.
4. Patent DE4021861, applicant: Siemens, H02K9/00, priority dated as of 09.07.1990, published on 16.01.1992.
5. Patent EP1841042, applicant: Hitachi, H02K 3/24, H02K3/51, priority dated as of 27.03.2006, published on 03.10.2007.
6. Patent EP1171938, applicant: General Electric, H02K1/32, priority dated as of 09.02.2000, published on 16.08.2001.
7. Patent EP160887, applicant: Kraftwerk Union AG - Siemens, H02K9/12, priority dated as of 08.05.1984, published on 13.11.1985.
8. Patent US6346754, applicant: Hitachi, H02K3/24, H02K3/26, priority dated as of 26.05.2000, published on 12.02.2002.
9. Patent US6087745, applicant: Siemens, H02K3/24, priority dated as of 19.10.1998, published on 11.07.2000.
10. Patent JP52027504, applicant: Hitachi, H02K1/32, H02K9/06, priority dated as of 27.08.1975, published on 01.03.1977.
11. Patent EP1850458, applicant: Toshiba, H02K3/24, H02K9/08, priority dated as of 28.04.2006, published on 15.11.2007.

## Claims

1. System of ventilation of the electrical machine rotor, consisting of a shell (1) enclosing a shaft (2); the ventilation system consists of the shell (1) placed under the winding coils' (4) ends; the space (3) between the shell (1) and the shaft (2) to provide the cooling air feed to the rotor; radial spacers (5) between the adjacent coils' (4) sides; ventilation ducts (12) for cooling of coils' (4) ends; space between the shell (1) and the lower turns of the coils' (4) ends, divided with the longitudinal spacers (9) mounted therein into the zones (10) of the cooling air inlet to the ventilation ducts (6) and the zones (11) of the cooling air outlet from the ventilation ducts (6), **characterized in that** the longitudinal spacers (9) are mounted opposite the rotor teeth at a pitch of a rotor slot; the shell (1) at the zones (10) of the cooling air inlet to the ventilation ducts (6) is provided with radial ducts (12) made at a pitch of two rotor slots; ventilation ducts (6) are U-shaped and made in the radial spacers; the system of ventilation being configured such that cooling air goes under the shell (1) along the shaft (2), and a certain part of the airflow is used for cooling of the coils' (4) ends; wherein cooling airflow enters the inlet zones (10) via radial ducts (12) of the shell (1), goes by
ventilation ducts (6), cooling the coils' (4) ends, and is discharged at the outlet zones (11); and wherein cooling air outflow goes from outlet zones (11) either in the direction of the coil (4) ends closing or in the direction of the rotor slotted part.

## Patentansprüche

1. System zum Belüften des Rotors einer elektrischen Maschine, das aus einem Gehäuse (1) besteht, das eine Welle (2) umschließt, wobei das Belüftungssystem aus einem Gehäuse (1), das unter den Enden von Wicklungsspulen (4) angeordnet ist; dem Raum (3) zwischen dem Gehäuse (1) und der Welle (2), der den Kühlluftzustrom zum Rotor bereitstellt; radialen Abstandhaltern (5) zwischen den Seiten von benachbarten Spulen (4); Belüftungskanälen (12) zum Kühlen der Enden von Spulen (4); Raum zwischen dem Gehäuse (1) und den unteren Windungen der Enden von Spulen (4), der mit den darin angebrachten Längsabstandhaltern (9) in die Zonen (10) des Kühllufteinlasses zu den Belüftungskanälen (6) und die Zonen (11) des Kühlluftauslasses aus den Belüftungskanälen (6) aufgeteilt ist, besteht, **dadurch gekennzeichnet, dass** die Längsabstandhalter (9) den Rotorzähnen gegenüberliegend in einer Teilung eines Rotorschlitzes angebracht sind; das Gehäuse (1) in den Zonen (10) des Kühllufteinlasses zu den Belüftungskanälen (6) mit radialen Kanälen (12) versehen ist, die in einer Teilung von zwei Rotorschlitzen gebildet sind; Belüftungskanäle (6) U-förmig und in den radialen Abstandhaltern gebildet sind; das Belüftungssystem so konfiguriert ist, dass Kühlluft unter dem Gehäuse (1) entlang der Welle (2) verläuft und ein gewisser Teil des Luftstroms zum Kühlen der Enden von Spulen (4) verwendet wird; wobei ein Kühlluftstrom über radiale Kanäle (12) des Gehäuses (1) in die Einlasszonen (10) eintritt, über Belüftungskanäle (6) verläuft, wobei er die Enden von Spulen (4) kühlt, und an den Auslasszonen (11) abgelassen wird; und wobei ein Kühlluftstrom von Auslasszonen (11) entweder in Richtung des Schlusses von Enden einer Spule (4) oder in Richtung des geschlitzten Rotorteils verläuft.

## Revendications

1. Système de ventilation d'un rotor de machine électrique, se composant d'une coque (1) enfermant un arbre (2) ; le système de ventilation se compose de la coque (1) placée sous les extrémités des bobines d'enroulement (4) ; de l'espace (3) entre la coque (1) et l'arbre (2) pour fournir l'alimentation en air de refroidissement au rotor ; des dispositifs d'espacement radiaux (5) entre les côtés des bobines (4) adjacentes ; des conduits de ventilation (12) pour refroidir les extrémités des bobines (4) ; l'espace entre la coque (1) et les spires inférieures des extrémités des bobines (4) étant divisé avec les dispositifs d'espacement longitudinaux (9) montés à l'intérieur de ce dernier en zones (10) de l'entrée d'air de refroidissement pour les conduits de ventilation (6) et en zones (11) de la sortie d'air de refroidissement des conduits de ventilation (6), **caractérisé en ce que** les dispositifs d'espacement longitudinaux (9) sont montés à l'opposé des dents du rotor à un pas d'une fente de rotor ; la coque (1) au niveau des zones (10) de l'entrée d'air de refroidissement vers les conduits de ventilation (6) est fournie avec des conduits radiaux (12) réalisés à un pas de deux fentes de rotor ; les conduits de ventilation (6) sont en forme de U et réalisés dans les dispositifs d'espacement radiaux ; le système de ventilation étant configuré de sorte que l'air de refroidissement va sous la coque (1) le long de l'arbre (2), et une certaine partie de l'écoulement d'air est utilisée pour refroidir les extrémités des bobines (4) ; dans lequel l'écoulement d'air de refroidissement entre dans les zones d'entrée (10) via les conduits radiaux (12) de la coque (1), passe par les conduits de ventilation (6), refroidissant les extrémités des bobines (4), et est déchargé au niveau des zones de sortie (11) ; et dans lequel l'écoulement d'air de refroidissement provient des zones de sortie (11) dans la direction de la fermeture des extrémités de bobine (4) ou dans la direction de la partie fendue du rotor.
